# EUROPEAN PATENT SPECIFICATION

(11) **EP 4 420 820 B1**
(45) Date of publication and mention of the grant of the patent: **19.03.2025**
(21) Application number: 23219978.6
(22) Date of filing: 22.12.2023
(51) Int. Cl.: B23K 26/21, B23K 26/323, H01M 50/516, H01M 50/55, H01M 50/553, H01M 50/562, B23K 103/10, B23K 103/12, B23K 103/18, H01M 50/507, H01M 50/522, B23K 101/38

(54) **POWER STORAGE DEVICE AND POWER STORAGE MODULE INCLUDING THE SAME**
ENERGIESPEICHERVORRICHTUNG UND ENERGIESPEICHERMODUL DAMIT
DISPOSITIF DE STOCKAGE D'ÉNERGIE ET MODULE DE STOCKAGE D'ÉNERGIE LE COMPRENANT

(30) Priority: 21.02.2023 JP 2023024956
(43) Date of publication of application: 28.08.2024
(73) Proprietor: Prime Planet Energy & Solutions, Inc., Chuo-ku Tokyo 103-0022 (JP)
(72) Inventor: MIYAMURA, Yukinobu, Tokyo, 103-0022 (JP); WAKIMOTO, Ryoichi, Tokyo, 103-0022 (JP)
(74) Representative: Kuhnen & Wacker Patent- und Rechtsanwaltsbüro PartG mbB

(56) References cited:
- WO-A1-2019/087455
- CN-A- 110 573 293
- KR-A- 20180 043 291

## Description

### BACKGROUND OF THE DISCLOSURE

### 1. Field

The present disclosure relates to a power storage device and a power storage module including the same.

### 2. Background

Japanese Patent Application Publication No. 2015-211981 describes a dissimilar metal joined body (laser joined body) including a copper material, an aluminum material, and a melted mixture part formed in a manner that a part of the aluminum material is melted and flows into the copper material, in which the melted mixture part satisfies predetermined width and depth.

CN 110 573 293 A and KR 2018 0043291 A disclose dissimilar metal joined conductors including a copper material and an aluminium material, which are both joined by laser welding.

### SUMMARY

According to the present inventors' examination, when the aforementioned technique is applied to an electrode terminal of a power storage device that is used for a power source for vehicle driving or the like, for example, there is still room for improvement. That is to say, in the application to the power source for vehicle driving or the like, when the power storage device is used, force of vibration, impact, or the like may be applied from the outside. In the technique according to Japanese Patent Application Publication No. 2015-211981, however, since the strength of a border part between a melted part and a non-melted part is low, a metal melted part is broken at the application of the external force, which may result in instable conductive connection of terminals or connection failure. Thus, it has been desired to improve the conduction reliability.

The present disclosure has been made in view of the above circumstances, and an object is to provide a power storage device including a terminal (dissimilar metal joined body) with improved conduction reliability.

A power storage device according to the present disclosure includes an electrode body that includes a first electrode and a second electrode, a battery case that accommodates the electrode body and includes a first surface where a penetration hole is provided, and a first electrode terminal that penetrates the penetration hole of the battery case and is electrically connected to the first electrode. The first electrode terminal includes a first conductive member in which a first metal occupies a maximum ratio on a mass basis, a second conductive member in which a second metal that is different from the first metal occupies a maximum ratio on a mass basis, the second conductive member having a shaft part disposed in the penetration hole, and a metal joined part where the first conductive member and the second conductive member are joined. The metal joined part includes, at a cross section being perpendicular to the first surface, passing an axial center of the shaft part, and extending in a radial direction of the shaft part, a first region in which the first metal occupies 70 mass% or more and a second region in which the second metal occupies 70 mass% or more, and when a surface passing a border part where the first conductive member and the second conductive member are in contact with each other around the metal joined part is a border surface, the first region includes a region that exists on a side of the first conductive member relative to the border surface and a first protrusion region that protrudes toward the second conductive member relative to the border surface, and the second region includes a region that exists on a side of the second conductive member relative to the border surface and a second protrusion region that protrudes toward the first conductive member relative to the border surface.

In the metal joined part, the first region includes the first protrusion region and the second region includes the second protrusion region; thus, a border between the first region and the second region has an uneven shape in a cross-sectional view. Therefore, the first conductive member and the second conductive member are mechanically engaged with each other and accordingly, the joining strength at the border part can be improved. Additionally, by bending the border part, the distance of the border can be extended; thus, even in the occurrence of a crack in the metal joined part, the development of the crack can be slowed down. As a result, according to the art disclosed herein, even if force of vibration, impact, or the like is applied from the outside during the use, the close contact state between the first conductive member and the second conductive member can be kept easily and the conductive connection between the first conductive member and the second conductive member can be kept stably. Accordingly, the power storage device including the terminal in which the conduction reliability of the metal joined part is improved can be achieved.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating a power storage module according to an embodiment;
FIG. 2 is a perspective view schematically illustrating a power storage device;
FIG. 3 is a schematic longitudinal cross-sectional view taken along line III-III in FIG. 2;
FIG. 4 is a perspective view schematically illustrating a sealing plate assembly;
FIG. 5 is a plan view schematically illustrating a vicinity of a negative electrode terminal in FIG. 4;
FIG. 6 is a schematic longitudinal cross-sectional view taken along line VI-VI in FIG. 4 and FIG. 5;
FIG. 7 is a schematic longitudinal cross-sectional view illustrating only the negative electrode terminal in FIG. 6;
FIG. 8 is a magnified view schematically illustrating a vicinity of a metal joined part in FIG. 7;
FIG. 9A is an explanatory view for describing a method of laser welding, and FIG. 9B is a schematic longitudinal cross-sectional view in a vicinity of the metal joined part taken along line IXB-IXB in FIG. 9A;
FIG. 10A illustrates a trace of laser welding and is a cross-sectional SEM observation image of a metal joined part in Comparative Example, and FIG. 10B illustrates a trace of laser welding and is a cross-sectional SEM observation image of a metal joined part in Example;
FIG. 11A is a plan view schematically illustrating a trace of laser welding in Example 1, and FIG. 11B is a plan view schematically illustrating a trace of laser welding in Example 2;
FIG. 12 expresses comparison in tensile strength between Example 1 and Example 2;
FIG. 13A and FIG. 13B are diagrams corresponding to FIG. 9A and FIG. 9B in a first modification, respectively;
FIG. 14 is a diagram corresponding to FIG. 5 in a second modification; and
FIG. 15 is a schematic longitudinal cross-sectional view in a vicinity of a metal joined part taken along line XV-XV in FIG. 14.

### DETAILED DESCRIPTION OF THE PREFERRED EMBODIMENTS

Hereinafter, some preferred embodiments of the art disclosed herein will be described with reference to the drawings. Incidentally, matters other than matters particularly mentioned in the present specification and necessary for the implementation of the present disclosure (for example, the general configuration and manufacturing process of a power storage device and a power storage module that do not characterize the present disclosure) can be grasped as design matters of those skilled in the art based on the conventional art in the relevant field. The present disclosure can be implemented based on the contents disclosed in the present specification and the technical common sense in the relevant field.

Note that in the drawings below, the members and parts with the same operation are denoted by the same reference sign and the overlapping description may be omitted or simplified. Moreover, in the present specification, the notation "X to Y" for a range signifies a value more than or equal to X and less than or equal to Y, and is meant to encompass also the meaning of being "more than X" and "less than Y".

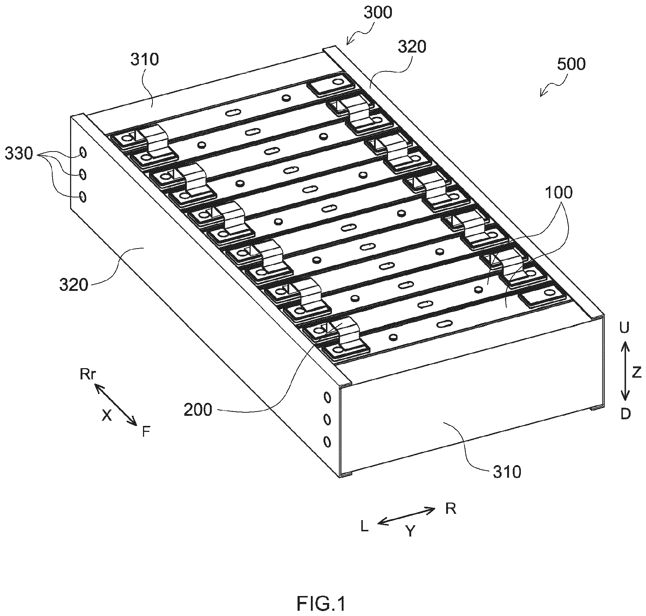

FIG. 1 is a perspective view schematically illustrating a power storage module 500 according to an embodiment. The power storage module 500 includes a plurality of power storage devices 100 that are disposed along an arrangement direction X and a plurality of busbars 200 that electrically connect the plurality of power storage devices 100 to each other. In this case, the power storage module 500 further includes a restriction mechanism 300. In the following description, reference signs L, R, F, Rr, U, and D in the drawings respectively denote left, right, front, rear, up, and down, and reference signs X, Y, and Z in the drawings respectively denote a thickness direction of the power storage device 100, a long side direction that is orthogonal to the thickness direction, and an up-down direction that is orthogonal to the thickness direction and the long side direction. The thickness direction X also corresponds to the arrangement direction of the power storage devices 100. These directions are defined however for convenience of explanation, and do not limit the manner in which the power storage module 500 is disposed.

The restriction mechanism 300 is configured to apply prescribed restriction pressure on the plurality of power storage devices 100 from the arrangement direction X. The restriction mechanism 300 here includes a pair of end plates 310, a pair of side plates 320, and a plurality of screws 330. The pair of end plates 310 are disposed at both ends of the plurality of power storage devices 100 in the arrangement direction X. The pair of end plates 310 hold the plurality of power storage devices 100 therebetween in the arrangement direction X. The pair of end plates 310 are preferably made of metal.

The pair of side plates 320 link between the pair of end plates 310. The pair of side plates 320 are preferably made of metal. The pair of side plates 320 are fixed to the end plates 310 by the plurality of screws 330 so that a restriction load is generally about 10 to 15 kN, for example. Thus, the restriction load is applied on the plurality of power storage devices 100 from the arrangement direction X and accordingly, the power storage module 500 is held integrally. The structure of the restriction mechanism is, however, not limited to this example. In another example, the restriction mechanism 300 may alternatively include a plurality of restriction bands, bind bars, or the like instead of the side plates 320.

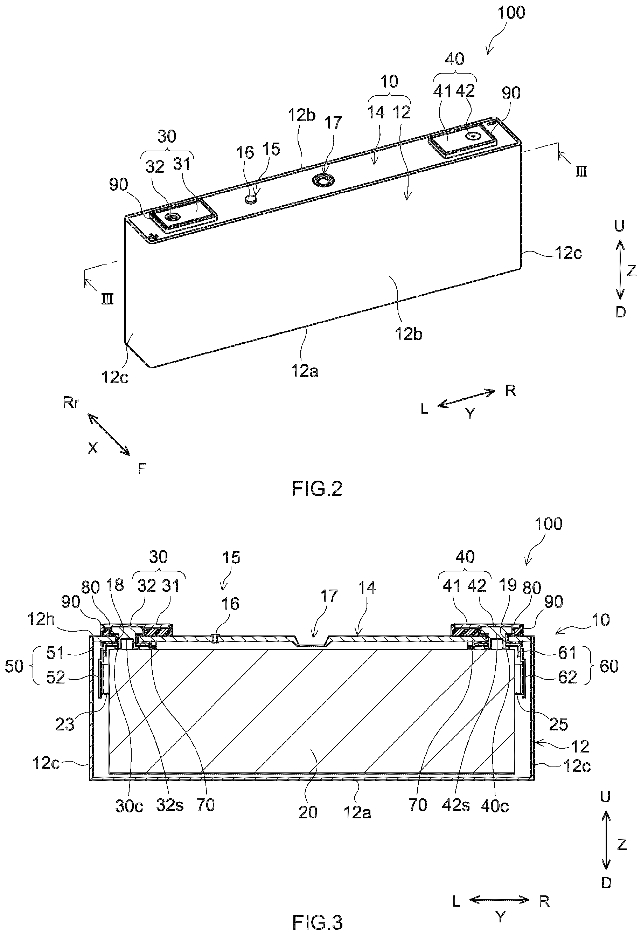

The busbar 200 is a conductive member and electrically connects the plurality of power storage devices 100 to each other. The busbar 200 is formed of, for example, a conductive metal such as aluminum, an aluminum alloy, nickel, or stainless steel. The busbar 200 is preferably formed of aluminum or an aluminum alloy. In FIG. 1, the busbar 200 is provided to link between a positive electrode terminal 30 (see FIG. 2, specifically a positive electrode first conductive member 31) and a negative electrode terminal 40 (see FIG. 2, specifically a negative electrode first conductive member 41), which will be described below, of the power storage devices 100 that are adjacent in the arrangement direction X. The busbar 200 is attached to each of the positive electrode terminal 30 and the negative electrode terminal 40 by welding such as laser welding, for example.

The power storage device 100 is a device that can store electric power and is capable of being charged and discharged repeatedly. Note that in the present specification, the term "power storage device" refers to a concept encompassing so-called secondary batteries such as lithium ion secondary batteries and nickel-hydrogen batteries and capacitors such as lithium ion capacitors and electrical double-layer capacitors.

As illustrated in FIG. 1, the plurality of power storage devices 100 are arranged along the arrangement direction X (in other words, the thickness direction X of the power storage device 100) between the pair of end plates 310. The shape, the size, the number, the arrangement, and the like of the plurality of power storage devices 100 included in the power storage module 500 are not limited to the aspect disclosed herein, and can be changed as appropriate. Between the power storage devices 100 that are adjacent in the arrangement direction X, a different member such as a spacer can exist. Here, the plurality of power storage devices 100 are connected to each other in series. However, the connection method between the plurality of power storage devices 100 is not limited to the series connection and may be, for example, parallel connection, multiple series-multiple parallel connection, or the like.

FIG. 2 is a perspective view of the power storage device 100. FIG. 3 is a schematic longitudinal cross-sectional view taken along line III-III in FIG. 2. As illustrated in FIG. 3, the power storage device 100 includes a battery case 10, an electrode body 20, the positive electrode terminal 30, the negative electrode terminal 40, a positive electrode current collecting member 50, and a negative electrode current collecting member 60. Although not illustrated, the power storage device 100 further includes a nonaqueous electrolyte solution (not illustrated) here. The nonaqueous electrolyte solution may be similar to the conventional nonaqueous electrolyte solution, without particular limitations. The power storage device 100 is a lithium ion secondary battery here. The power storage device 100 is characterized by including the positive electrode terminal 30 and/or the negative electrode terminal 40 disclosed herein, and the other configurations may be similar to those in the related art.

The battery case 10 is a housing that accommodates the electrode body 20 and the nonaqueous electrolyte solution. As illustrated in FIG. 2, the external shape of the battery case 10 is a flat and bottomed cuboid shape (rectangular shape) here. A conventionally used material can be used for the battery case 10, without particular limitations. The battery case 10 is preferably made of metal, for example, more preferably made of aluminum, an aluminum alloy, iron, an iron alloy, or the like, and particularly preferably made of aluminum or an aluminum alloy. As illustrated in FIG. 3, the battery case 10 includes an exterior body 12 including an opening 12h and a sealing plate (lid body) 14 that seals the opening 12h. The battery case 10 preferably includes the exterior body 12 and the sealing plate 14.

As illustrated in FIG. 2, the exterior body 12 includes a bottom wall 12a with a substantially rectangular shape facing the opening 12h (see FIG. 3), a pair of long side walls 12b extending from long sides of the bottom wall 12a and facing each other, and a pair of short side walls 12c extending from short sides of the bottom wall 12a and facing each other. The long side wall 12b is larger in area than the short side wall 12c. Note that in the present specification, the term "substantially rectangular shape" encompasses, in addition to a perfect rectangular shape (rectangle), for example, a shape whose corner connecting a long side and a short side of the rectangular shape is rounded, a shape whose corner includes a notch, and the like.

The sealing plate 14 is a plate-shaped member expanding along an XY plane in FIG. 2. The sealing plate 14 is one example of "first surface". As illustrated in FIG. 3, the sealing plate 14 is attached to the exterior body 12 so as to cover the opening 12h. The sealing plate 14 faces the bottom wall 12a of the exterior body 12. The sealing plate 14 here is substantially rectangular in shape. It is preferable that the sealing plate 14 be substantially rectangular in shape. The battery case 10 is unified in a manner that the sealing plate 14 is joined (preferably, joined by welding) to a periphery of the opening 12h of the exterior body 12. The battery case 10 is hermetically sealed (closed).

As illustrated in FIG. 3, a liquid injection hole 15, a discharge valve 17, and two terminal extraction holes 18 and 19 are provided in the sealing plate 14. The liquid injection hole 15 is provided for the purpose of injecting the nonaqueous electrolyte solution after the sealing plate 14 is assembled to the exterior body 12. The liquid injection hole 15 is sealed by a sealing member 16. The discharge valve 17 is configured to break when the pressure in the battery case 10 becomes more than or equal to a predetermined value so as to discharge the gas out of the battery case 10.

As illustrated in FIG. 3, the terminal extraction holes 18 and 19 penetrate the sealing plate 14 in the up-down direction Z. The terminal extraction holes 18 and 19 are one example of "penetration hole" provided to the sealing plate 14 (first surface). In a plan view, the terminal extraction holes 18 and 19 are formed in an annular shape (for example, circular shape). The terminal extraction hole 18 has the inner diameter that enables a shaft column part 32s of the positive electrode terminal 30 to be described below before a caulking process (before being attached to the sealing plate 14) to pass therethrough. The terminal extraction hole 19 has the inner diameter that enables a shaft column part 42s of the negative electrode terminal 40 to be described below before the caulking process (before being attached to the sealing plate 14) to pass therethrough.

As illustrated in FIG. 3, the electrode body 20 is accommodated inside the battery case 10 (in detail, the exterior body 12). Although not illustrated, the electrode body 20 includes a positive electrode and a negative electrode. The positive electrode includes a positive electrode current collector, and a positive electrode mixture layer fixed on the positive electrode current collector and including a positive electrode active material. The negative electrode includes a negative electrode current collector, and a negative electrode mixture layer fixed on the negative electrode current collector and including a negative electrode active material. One of the positive electrode and the negative electrode is one example of "first electrode" and the other is one example of "second electrode". In the present embodiment, the first electrode is the negative electrode and the second electrode is the positive electrode. The first electrode is preferably the negative electrode and the second electrode is preferably the positive electrode.

The structure of the electrode body 20 may be similar to the conventional structure thereof, without particular limitations. The electrode body 20 here is a wound electrode body with a flat shape in which the positive electrode with a band shape and the negative electrode with a band shape are stacked via a separator in an insulated state and wound using a winding axis as a center. In another embodiment, the electrode body 20 may be a stack type electrode body formed in a manner that a plurality of square positive electrodes and a plurality of square negative electrodes are stacked in the insulated state. The number of electrode bodies 20 to be disposed in one battery case 10 is not limited in particular and may be one or plural.

As illustrated in FIG. 3, a positive electrode current collecting part 23 is provided at one end part of the electrode body 20 in a winding axis direction (the long side direction Y in FIG. 3) (left end part in FIG. 3). The positive electrode current collecting part 23 is an exposed part of the positive electrode current collector in this case, and is formed of, for example, a conductive metal such as aluminum, an aluminum alloy, nickel, or stainless steel. To the positive electrode current collecting part 23, a second part 52 of the positive electrode current collecting member 50 to be described below is attached. A negative electrode current collecting part 25 is provided at the other end part of the electrode body 20 in the winding axis direction (right end part in FIG. 3). The negative electrode current collecting part 25 is an exposed part of the negative electrode current collector in this case, and is formed of, for example, a conductive metal such as copper, a copper alloy, nickel, or stainless steel. To the negative electrode current collecting part 25, a second part 62 of the negative electrode current collecting member 60 to be described below is attached.

The positive electrode current collecting member 50 constitutes a conductive path that electrically connects the positive electrode terminal 30 and the positive electrode (second electrode) of the electrode body 20. The positive electrode current collecting member 50 is preferably formed of the same metal species as the positive electrode current collecting part 23, for example, a conductive metal such as aluminum, an aluminum alloy, nickel, or stainless steel. As illustrated in FIG. 3, the positive electrode current collecting member 50 includes a first part 51 with a substantially L-like shape, and the second part 52 electrically connected to the first part 51 and extending along the short side wall 12c of the exterior body 12. The first part 51 is attached to an inner surface of the sealing plate 14 by the caulking process in an insulated state through an internal insulating member 70. The first part 51 is electrically connected to the positive electrode terminal 30. The second part 52 is attached to the positive electrode current collecting part 23.

The negative electrode current collecting member 60 constitutes a conductive path that electrically connects the negative electrode terminal 40 and the negative electrode (first electrode) of the electrode body 20. The negative electrode current collecting member 60 is preferably formed of the same metal species as the negative electrode current collecting part 25, for example, a conductive metal such as copper, a copper alloy, nickel, or stainless steel. As illustrated in FIG. 3, the negative electrode current collecting member 60 includes a first part 61 with a substantially L-like shape, and the second part 62 electrically connected to the first part 61 and extending along the short side wall 12c of the exterior body 12. The first part 61 is attached to the inner surface of the sealing plate 14 by the caulking process in the insulated state through the internal insulating member 70. The first part 61 is electrically connected to the negative electrode terminal 40. The second part 62 is attached to the negative electrode current collecting part 25.

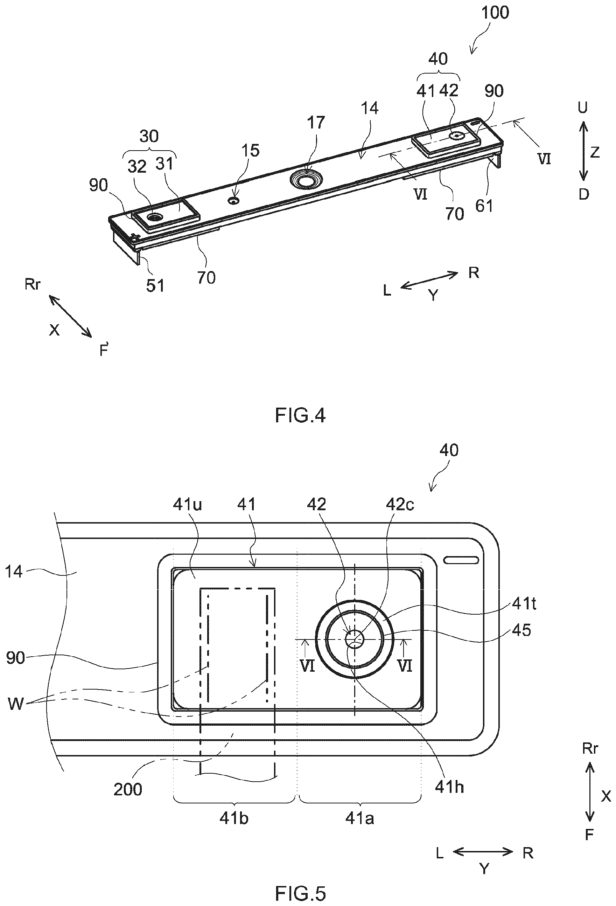

FIG. 4 is a perspective view schematically illustrating a united object in which the positive electrode terminal 30, the negative electrode terminal 40, the first part 51 of the positive electrode current collecting member 50, and the first part 61 of the negative electrode current collecting member 60 are attached to a sealing plate assembly, that is, the sealing plate 14. The positive electrode terminal 30 and the negative electrode terminal 40 are preferably attached to the sealing plate 14.

The positive electrode terminal 30 is disposed at an end part of the sealing plate 14 on one side in the long side direction Y (left end part in FIG. 2 to FIG. 4). As illustrated in FIG. 3, the positive electrode terminal 30 is electrically connected to the positive electrode (second electrode) of the electrode body 20 through the positive electrode current collecting member 50. The positive electrode terminal 30 includes two kinds of conductive members, that is, the positive electrode first conductive member 31 and a positive electrode second conductive member 32. The positive electrode first conductive member 31 and the positive electrode second conductive member 32 are integrated and electrically connected to each other. The positive electrode first conductive member 31 is disposed outside the battery case 10. The positive electrode first conductive member 31 here has a plate shape. The positive electrode first conductive member 31 is insulated from an outer surface of the sealing plate 14 (upper surface in FIG. 3) by an external insulating member 90. When the power storage module 500 (see FIG. 1) is manufactured, the busbar 200 is attached to the positive electrode first conductive member 31.

The positive electrode second conductive member 32 penetrates the terminal extraction hole 18 and extends from inside to outside of the battery case 10. The positive electrode second conductive member 32 includes the shaft column part 32s that is disposed in the terminal extraction hole 18. The positive electrode second conductive member 32 is insulated from the sealing plate 14 by the internal insulating member 70 and a gasket 80. The gasket 80 insulates the sealing plate 14 and the positive electrode second conductive member 32 and moreover, has a function that closes the terminal extraction hole 18. In this case, the positive electrode second conductive member 32 is fixed by caulking to a peripheral part of the sealing plate 14 that surrounds the terminal extraction hole 18 in the state of being insulated from the sealing plate 14 by the caulking process. A caulking part 30c is formed at an end part of the positive electrode second conductive member 32 on the exterior body 12 side (lower end part in FIG. 3). The positive electrode second conductive member 32 is fixed to the sealing plate 14 by the caulking process and moreover, electrically connected to the first part 51.

The negative electrode terminal 40 is disposed at an end part of the sealing plate 14 on the other side in the long side direction Y (right end part in FIG. 2 to FIG. 4). As illustrated in FIG. 3, the negative electrode terminal 40 is electrically connected to the negative electrode (first electrode) of the electrode body 20 through the negative electrode current collecting member 60. In the present embodiment, the negative electrode terminal 40 is one example of "first electrode terminal that is electrically connected to the negative electrode (first electrode)". The first electrode terminal is preferably the negative electrode terminal 40. Hereinafter, a structure is explained in detail about the case where the first electrode terminal is the negative electrode terminal 40. In another embodiment, however, the first electrode terminal may be the positive electrode terminal 30. In that case, "negative electrode" can be replaced by "positive electrode" as appropriate in the description below.

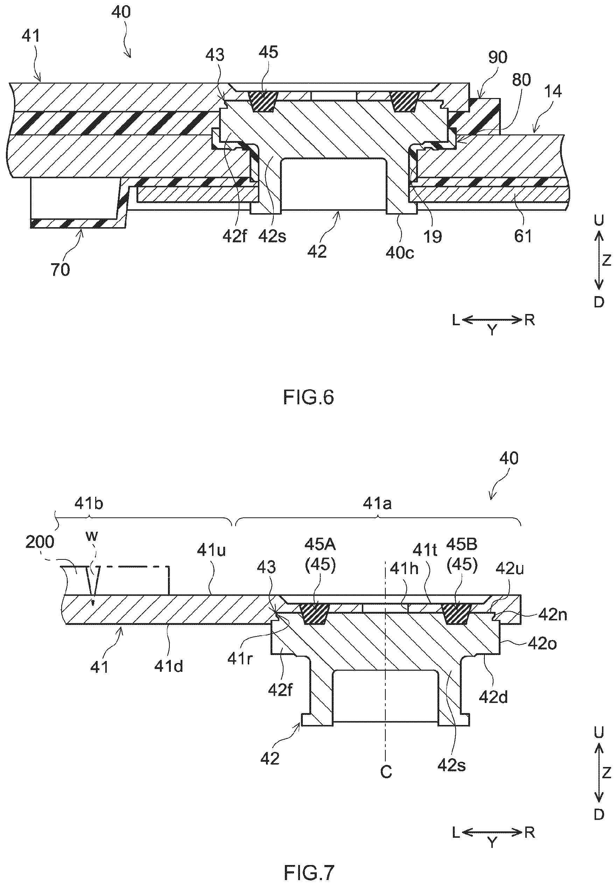

FIG. 5 is a plan view schematically illustrating a vicinity of the negative electrode terminal 40 in FIG. 4. FIG. 6 is a schematic longitudinal cross-sectional view taken along line VI-VI in FIG. 4 and FIG. 5. FIG. 7 is a schematic longitudinal cross-sectional view illustrating only the negative electrode terminal 40 in FIG. 6. As illustrated in FIG. 6, the negative electrode terminal 40 includes two kinds of conductive members, that is, the negative electrode first conductive member 41 and a negative electrode second conductive member 42. The negative electrode first conductive member 41 is one example of "first conductive member". The negative electrode second conductive member 42 is one example of "second conductive member". The negative electrode first conductive member 41 and the negative electrode second conductive member 42 are integrated by a fastening part 43 and a metal joined part 45, which will be described below, so as to be connected electrically to each other. However, the fastening part 43 is not essential and may be omitted in another embodiment.

The negative electrode first conductive member 41 is formed of, for example a conductive metal such as aluminum, an aluminum alloy, nickel, or stainless steel. The negative electrode first conductive member 41 preferably contains aluminum or an aluminum alloy. The negative electrode first conductive member 41 is preferably formed of aluminum or an aluminum alloy at least in the vicinity of the metal joined part 45. The negative electrode first conductive member 41 is preferably formed of aluminum or an aluminum alloy. In the present embodiment, the negative electrode first conductive member 41 is mainly formed of a first metal. In other words, the first metal occupies the maximum ratio on the mass basis. The first metal occupies preferably 50 mass% or more, more preferably 70 mass% or more, and particularly preferably 90 mass% or more of the entire negative electrode first conductive member 41 (however, excluding a part where the metal joined part 45 is formed). The first metal is preferably aluminum. The first metal is preferably the same metal species as the busbar 200.

The negative electrode first conductive member 41 is disposed outside the battery case 10. The negative electrode first conductive member 41 has a plate shape here. As illustrated in FIG. 6, the negative electrode first conductive member 41 is insulated from the outer surface (upper surface in FIG. 6) of the sealing plate 14 by the external insulating member 90. Between the negative electrode first conductive member 41 and the sealing plate 14, the external insulating member 90 is preferably disposed. The external insulating member 90 is preferably a resin member.

As illustrated in FIG. 5, the negative electrode first conductive member 41 has a substantially rectangular shape here. The negative electrode first conductive member 41 has two parts sectioned in the long side direction Y: a connection part 41a electrically connected to the negative electrode second conductive member 42; and an extension part 41b disposed on one side of the connection part 41a in the long side direction Y (on the left in FIG. 5). The extension part 41b is a part where the busbar 200 is disposed when the power storage module 500 (see FIG. 1) is manufactured. The extension part 41b is one example of "busbar connection region". By the provision of the extension part 41b, the contact area with the busbar 200 can be secured sufficiently and the conduction reliability of the power storage module 500 can be improved. Note that in FIG. 5 and FIG. 7, the busbar 200 and a welding part W between the busbar 200 and the negative electrode first conductive member 41 are expressed with imaginary lines (two-dot chain lines).

As illustrated in FIG. 7, the negative electrode first conductive member 41 has a flat plate shape and includes a lower surface 41d and an upper surface 41u here. The lower surface 41d is in contact with the negative electrode second conductive member 42. As can be seen from FIG. 6, the lower surface 41d is a surface that faces the battery case 10 (specifically, sealing plate 14). The upper surface 41u is a surface apart from the battery case 10 and the negative electrode second conductive member 42. As illustrated in FIG. 7, the negative electrode first conductive member 41 includes a thin part 41t that is depressed from the upper surface 41u to be thinner than the extension part 41b, a penetration hole 41h penetrating in the up-down direction Z, and a concave part 41r depressed from the lower surface 41d.

As illustrated in FIG. 5, the thin part 41t is formed in an annular shape (for example, circular shape) so as to surround the penetration hole 41h in a plan view. In the thin part 41t, the metal joined part 45 is provided. The penetration hole 41h is formed at a center part of the thin part 41t in a plan view. The penetration hole 41h can function as an escape route of distortion by gas or heat generated at welding. The penetration hole 41h is formed to be circular in a plan view. The penetration hole 41h is provided on an inner peripheral side relative to the fastening part 43 and the metal joined part 45. From the penetration hole 41h, the negative electrode second conductive member 42 (specifically, a flange part 42f to be described below) is exposed.

As illustrated in FIG. 7, the concave part 41r is provided on an outer peripheral side relative to the metal joined part 45. Although not illustrated, the concave part 41r is formed in an annular shape (for example, circular shape) in a plan view. The concave part 41r is formed in a tapered shape whose diameter reduces toward the lower surface 41d of the negative electrode first conductive member 41 (in other words, toward the negative electrode second conductive member 42) here. In the concave part 41r, the fastening part 43 is provided. In the concave part 41r, a constriction part 42n of the negative electrode second conductive member 42, which is described below, is inserted.

The negative electrode second conductive member 42 is formed of, for example, a conductive metal such as copper, a copper alloy, nickel, or stainless steel. The negative electrode second conductive member 42 preferably contains copper or a copper alloy. The negative electrode second conductive member 42 is preferably formed of copper or a copper alloy at least in the vicinity of the metal joined part 45. The negative electrode second conductive member 42 is preferably formed of copper or a copper alloy. In the present embodiment, the negative electrode second conductive member 42 is mainly formed of a second metal. In other words, the second metal occupies the maximum ratio on the mass basis. The second metal occupies preferably 50 mass% or more, more preferably 70 mass% or more, and particularly preferably 90 mass% or more of the entire negative electrode second conductive member 42 (however, excluding a part where the metal joined part 45 is formed). The second metal is particularly preferably copper. The second metal is preferably a metal with higher hardness (for example, Vickers hardness (HV)) than the first metal. The second metal is preferably the same metal species as the negative electrode current collecting part 25 and/or the negative electrode current collecting member 60. The negative electrode second conductive member 42 may include a metal covered part that is formed of copper or a copper alloy mainly and has a surface thereof partially or entirely covered with metal such as Ni. Thus, the resistance against an electrolyte can be increased and the corrosion resistance can be improved.

As illustrated in FIG. 6, the negative electrode second conductive member 42 penetrates the terminal extraction hole 19 and extends from inside to outside of the battery case 10. The negative electrode second conductive member 42 is insulated from the sealing plate 14 by the internal insulating member 70 and the gasket 80. The gasket 80 insulates the sealing plate 14 and the negative electrode second conductive member 42 and moreover, has a function that closes the terminal extraction hole 19. In this case, the negative electrode second conductive member 42 is fixed by caulking to a peripheral part of the sealing plate 14 that surrounds the terminal extraction hole 19 in the state of being insulated from the sealing plate 14 by the caulking process. A caulking part 40c is formed at an end part of the negative electrode second conductive member 42 on the exterior body 12 side (lower end part in FIG. 6). The negative electrode second conductive member 42 is fixed to the sealing plate 14 by the caulking process and moreover, electrically connected to the first part 61.

The negative electrode second conductive member 42 has a substantially cylindrical columnar shape here. The negative electrode second conductive member 42 preferably has a columnar shape. As illustrated in FIG. 7, the negative electrode second conductive member 42 has an axial center C. The negative electrode second conductive member 42 includes the flange part 42f electrically connected to the negative electrode first conductive member 41, and the shaft column part 42s coupled to a lower end part of the flange part 42f. The negative electrode second conductive member 42 preferably has the flange part 42f on an upper part and the shaft column part 42s below the flange part 42f.

The flange part 42f is a part that protrudes from the terminal extraction hole 19 of the sealing plate 14 to the outside of the battery case 10 as illustrated in FIG. 6. The flange part 42f has a larger outer shape than the shaft column part 42s. Although not illustrated, the outer shape of the flange part 42f is substantially cylindrical columnar here. The outer shape of the flange part 42f is larger than that of the terminal extraction hole 19 of the sealing plate 14. As illustrated in FIG. 7, an axial center of the flange part 42f coincides with the axial center C of the negative electrode second conductive member 42. The flange part 42f includes a lower surface 42d, a side surface (outer peripheral surface) 42o extending upward from the lower surface 42d, the constriction part 42n in which a part of the side surface 42o is constricted, and an upper surface 42u. The upper surface 42u is in contact with the concave part 41r of the negative electrode first conductive member 41. On the upper surface 42u, the metal joined part 45 is provided.

The constriction part 42n is provided continuously or intermittently in a part of the side surface 42o of the flange part 42f as illustrated in FIG. 7. Although not illustrated, the constriction part 42n is formed in an annular shape (for example, circular shape) in a plan view. When the constriction part 42n is formed in the annular shape, the fastening part 43 with high strength can be formed. The constriction part 42n is formed axially symmetrically about the axial center C of the flange part 42f. The constriction part 42n is formed in an inverted tapered shape whose diameter increases toward the upper surface 41u (in other words, away from the shaft column part 42s). The fastening part 43 is provided in the constriction part 42n. The constriction part 42n is inserted into the concave part 41r of the negative electrode first conductive member 41. The constriction part 42n is fitted into the concave part 41r of the negative electrode first conductive member 41 and engaged with the concave part 41r here.

As illustrated in FIG. 7, the shaft column part 42s extends downward from the lower end part of the flange part 42f. The shaft column part 42s is one example of "shaft part". Although not illustrated, the shaft column part 42s has a cylindrical shape here. An axial center of the shaft column part 42s coincides with the axial center C of the flange part 42f. Before the caulking process, the lower end part of the shaft column part 42s, that is, an end part on the opposite side of the flange part 42f is hollow. As illustrated in FIG. 6, the shaft column part 42s is disposed in the terminal extraction hole 19 of the sealing plate 14. The lower end part of the shaft column part 42s is spread by the caulking process to form the caulking part 40c. The shaft column part 42s is electrically connected to the first part 61 of the negative electrode current collecting member 60 by the caulking process.

The fastening part 43 is a mechanical fixing part for the negative electrode first conductive member 41 and the negative electrode second conductive member 42. Here, the fastening part 43 is a mechanical fixing part for the concave part 41r and the flange part 42f (specifically, constriction part 42n). By the provision of the fastening part 43 in addition to the metal joined part 45, the conduction reliability of the negative electrode terminal 40 can be improved further. A formation method for the fastening part 43 is not limited in particular as long as mechanical joining with mechanical energy is used, and may be, for example, press-fitting, caulking, shrink-fitting, riveting, folding, bolt joining, or the like.

In the present embodiment, the fastening part 43 is provided at the lower surface 41d of the negative electrode first conductive member 41 as illustrated in FIG. 6. The fastening part 43 is an engagement part where the concave part 41r of the negative electrode first conductive member 41 and the constriction part 42n of the negative electrode second conductive member 42 are engaged here. Specifically, the fastening part 43 is a press-fitting engagement part where the constriction part 42n of the negative electrode second conductive member 42 is engaged with the concave part 41r of the negative electrode first conductive member 41 by press-fitting. The fastening part 43 is configured in a manner that an inner wall of the concave part 41r of the negative electrode first conductive member 41 is fixed (for example, fixed by pressure) with the constriction part 42n of the negative electrode second conductive member 42. Thus, even when the negative electrode first conductive member 41 and the negative electrode second conductive member 42 are formed of dissimilar metal for example, these can be fixed suitably.

The fastening part 43 is provided on an outer peripheral side of the flange part 42f relative to the metal joined part 45 here. Although not illustrated, the fastening part 43 is formed in an annular shape (for example, circular shape) in a plan view. The fastening part 43 is formed continuously here. Thus, the strength of the fastening part 43 can be increased and the conduction reliability of the negative electrode terminal 40 can be improved further.

The metal joined part 45 is a metallurgic joined part between the negative electrode first conductive member 41 and the negative electrode second conductive member 42. The metal joined part 45 is a joined part between the thin part 41t and the flange part 42f here. The metal joined part 45 includes a fused and solidified part, which is formed in a manner that the negative electrode first conductive member 41 and the negative electrode second conductive member 42 are melted by irradiation with an energy beam, fused, and solidified. The fused and solidified part can be formed by using, for example, light energy, electron energy, thermal energy, or the like. In particular, welding is preferable. The welding can achieve the metal joined part 45 with high strength relatively easily and stably. A method of the welding is not limited in particular and may be, for example, laser welding, electron beam welding, ultrasonic welding, resistance welding, tungsten inert gas (TIG) welding, or the like. The metal joined part 45 is preferably a laser welding part formed by laser welding. Note that a suitable condition of the laser welding will be discussed in a manufacturing method below.

As illustrated in FIG. 6, in the present embodiment, the metal joined part 45 is provided on the upper surface 41u of the negative electrode first conductive member 41. The metal joined part 45 is provided at a position apart from the penetration hole 41h. The metal joined part 45 is provided on an outer peripheral side of the penetration hole 41h. The metal joined part 45 is provided at a position apart from the fastening part 43. Thus, the thermal influence on the fastening part 43 and the like can be reduced. The metal joined part 45 can be a joined part with relatively higher stiffness than the fastening part 43, for example.

The metal joined part 45 is provided on the inner peripheral side (on a center side of the flange part 42f) relative to the fastening part 43 in a plan view here. In other words, the metal joined part 45 is provided closer to a center 42c of the negative electrode second conductive member 42. The metal joined part 45 can be a joined part with relatively lower strength (fragile) than the fastening part 43. By arranging the aforementioned metal joined part 45 on the inner peripheral side of the fastening part 43, the metal joined part 45 can be maintained stably and the conduction reliability of the negative electrode terminal 40 can be increased for a long time.

The metal joined part 45 is provided in the thin part 41t here. Thus, the energy at the joining can be saved and the weldability can be improved. The metal joined part 45 is formed continuously or intermittently. The metal joined part 45 is formed axially symmetrically about the axial center C of the flange part 42f. Thus, the strength of the metal joined part 45 can be increased and the conduction reliability of the negative electrode terminal 40 can be improved further.

As illustrated in FIG. 5, the metal joined part 45 is formed in an annular shape (for example, circular shape) in a plan view. Thus, the strength (for example, tensile strength) of the metal joined part 45 can be increased and the conduction reliability of the negative electrode terminal 40 can be improved further. The metal joined part 45 is provided so as to surround the center 42c of the flange part 42f along the entire circumference here. As illustrated in FIG. 7, the metal joined part 45 is provided so as to surround an outer edge of the penetration hole 41h using the axial center C of the flange part 42f as a center. By providing the metal joined part 45 at a periphery of the penetration hole 41h, the distortion or deformation due to heat at the welding can be released, so that the influence on the fastening part 43 and the like can be reduced. In the cross-sectional view in FIG. 7, the metal joined part 45 is distinguished as follows: a metal joined part 45A on a side closer to the extension part 41b (on the left side in FIG. 7); and a metal joined part 45B on a side farther from the extension part 41b (on the right side in FIG. 7).

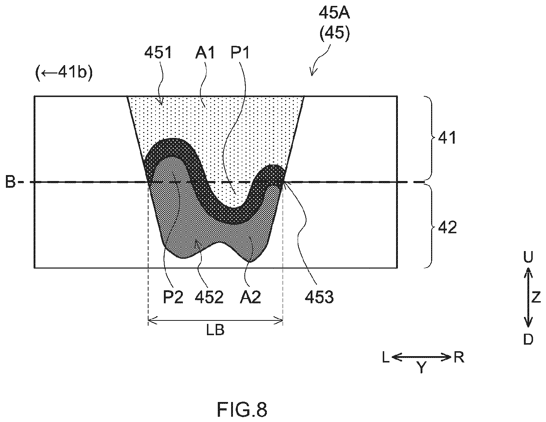

FIG. 8 is a magnified view schematically illustrating the vicinity of the metal joined part 45A on the side closer to the extension part 41b in FIG. 7 (on the left side in FIG. 7). As illustrated in FIG. 8, at a cross section being perpendicular to the sealing plate 14 (first surface), passing the axial center C of the shaft column part 42s, and extending in a radial direction of the shaft column part 42s, the metal joined part 45 includes a first region 451 and a second region 452. As indicated by a dashed line in FIG. 8, the negative electrode terminal 40 includes a border surface B passing a border part where the negative electrode first conductive member 41 and the negative electrode second conductive member 42 are in contact with each other around the metal joined part 45. The border surface B extends in a direction parallel to the sealing plate 14 (specifically, the outer surface of the sealing plate 14 or the inner surface of the sealing plate 14). In FIG. 8, the border surface B passes the metal joined part 45. The border surface B roughly divides the metal joined part 45 into the negative electrode first conductive member 41 side (upper side in FIG. 8) and the negative electrode second conductive member 42 side (lower side in FIG. 8).

In the present embodiment, the cross section is a first cross section (cross section taken along line VI-VI in FIG. 4 and FIG. 5) passing the axial center C of the negative electrode second conductive member 42 and extending along the long side direction Y of the sealing plate 14 (first surface). However, for example, in a case where the metal joined part 45 has a shape other than the annular shape and the metal joined part 45 is not formed in this first cross section, the aforementioned cross section may be a second cross section with the smallest angle with the first cross section among the cross sections passing the axial center C of the negative electrode second conductive member 42 and extending in the radial direction of the negative electrode second conductive member 42.

The first region 451 is a region where the first metal (here, Al) occupies 70 mass% or more. The first region 451 can be a region where the metal (mainly, second metal) included in the negative electrode second conductive member 42 is melted in the negative electrode first conductive member 41. By suppressing the melting of the metal other than the first metal in the first region 451 to be less than 30 mass%, generation of a fragile intermetallic compound can be suppressed and the strength (for example, tensile strength) can be increased. The first region 451 exists mostly on the negative electrode first conductive member 41 side (upper side in FIG. 8) relative to the border surface B and partially protrudes toward the negative electrode second conductive member 42 (lower side in FIG. 8). The first region 451 includes a region A1 existing on the negative electrode first conductive member 41 side (upper side in FIG. 8) relative to the border surface B and a first protrusion region P1 protruding toward the negative electrode second conductive member 42 (lower side in FIG. 8) relative to the border surface B.

The second region 452 is a region where the second metal (here, Cu) occupies 70 mass% or more. The second region 452 can be a region where the metal (mainly, first metal) included in the negative electrode first conductive member 41 is melted in the negative electrode second conductive member 42. By suppressing the melting of the metal other than the second metal in the second region 452 to be less than 30 mass%, the generation of the fragile intermetallic compound can be suppressed and the strength (for example, tensile strength) can be increased. In contrast to the first region 451, the second region 452 exists mostly on the negative electrode second conductive member 42 side (lower side in FIG. 8) relative to the border surface B and partially protrudes toward the negative electrode first conductive member 41 (upper side in FIG. 8). The second region 452 includes a region A2 existing on the negative electrode second conductive member 42 side (lower side in FIG. 8) relative to the border surface B and a second protrusion region P2 protruding toward the negative electrode first conductive member 41 (upper side in FIG. 8) relative to the border surface B.

In this manner, in the present embodiment, the first region 451 includes the first protrusion region P1, the second region 452 includes the second protrusion region P2, and a border between the first region 451 and the second region 452 has an uneven shape. A border part between the first region 451 and the second region 452 is slippery and has low strength in general; however, when the border part has such an uneven shape and the negative electrode first conductive member 41 and the negative electrode second conductive member 42 are engaged with each other mechanically, the border part becomes less slippery and the joining strength (for example, tensile strength) can be improved. Additionally, by bending the border part, the distance of the border part can be extended; thus, even in the occurrence of a crack in the metal joined part 45, the development of the crack can be slowed down. As a result, according to the art disclosed herein, even if force of vibration, impact, or the like is applied from the outside during the use, the close contact state between the negative electrode first conductive member 41 and the negative electrode second conductive member 42 can be kept easily and the conductive connection between the negative electrode first conductive member 41 and the negative electrode second conductive member 42 can be kept stably.

The metal joined part 45 where the first region 451 includes the first protrusion region P1 and the second region 452 includes the second protrusion region P2 can be achieved by performing circumferential welding (wobbling) at the welding, for example, as illustrated in FIG. 8, which will be described in detail below.

Although not limited in particular, as illustrated in FIG. 8, at the cross section being perpendicular to the sealing plate 14 (first surface), passing the axial center C of the shaft column part 42s, and extending in the radial direction of the shaft column part 42s, a ratio C1 of the area of the first protrusion region P1 to the total area of the first region 451 is preferably 0.01 to 0.4 (1 to 40%) and more preferably 0.03 to 0.2 (3 to 20%). Furthermore, a ratio C2 of the area of the second protrusion region P2 to the total area of the second region 452 is preferably 0.03 to 0.5 (3 to 50%) and more preferably 0.05 to 0.3 (5 to 30%). With the ratios in the aforementioned ranges, the negative electrode first conductive member 41 and the negative electrode second conductive member 42 can be mechanically engaged with each other more firmly. In addition, the development of the crack can be slowed down effectively. Therefore, the effect of the art disclosed herein can be achieved at a higher level. The ratio C2 of the area of the second protrusion region P2 is preferably larger than the ratio C1 of the area of the first protrusion region P1. Note that the aforementioned ratios C1 and C2 of the areas can be achieved by adjusting the conditions of the welding to be described below (for example, output of laser, frequency or width of wobbling, or the like).

As illustrated in FIG. 8, at the cross section (here, cross section taken along line VI-VI in FIG. 4 and FIG. 5) being perpendicular to the sealing plate 14 (first surface), passing the axial center C of the shaft column part 42s, and extending in the radial direction of the shaft column part 42s, a part of the border surface B that passes the metal joined part 45 is a line LB. At this time, it is preferable that a half (50%) or more of the line LB cross the second region 452. When the line LB crosses the second region 452 containing a large amount of second metal with high hardness (here, Cu) with a probability of 50% or more@@, the strength (for example, tensile strength) or the durability of the metal joined part 45 can be improved.

In a case where the negative electrode terminal 40 includes the fastening part 43, in at least one of (preferably, both) the two metal joined parts 45 (metal joined part 45A and metal joined part 45B) included in the cross section in FIG. 7, the second protrusion region P2 is preferably disposed closer to the fastening part 43 than the first protrusion region P1 at the cross section (here, cross section taken along line VI-VI in FIG. 4 and FIG. 5) being perpendicular to the sealing plate 14 (first surface), passing the axial center C of the shaft column part 42s, and extending in the radial direction of the shaft column part 42s as illustrated in FIG. 8. According to the present inventors' examination, when vibration, impact, or the like is applied to the fastening part 43, the metal joined part 45 starts to be broken from the fastening part 43 side. Therefore, by arranging the second protrusion region P2 containing a large amount of second metal with relative high hardness (here, Cu) closer to the fastening part 43 than the first protrusion region P1 containing a large amount of first metal with relative low hardness (here, Al), the strength (for example, tensile strength) and the durability of the metal joined part 45 can be improved. Note that the positional relation between the first protrusion region P1 and the second protrusion region P2 can be adjusted by the condition of the welding (specifically, direction of rotation of wobbling) to be described below.

In the case where the negative electrode terminal 40 includes the extension part 41b and the busbar 200 is connected to the extension part 41b, in at least one of the metal joined part 45A and the metal joined part 45B (preferably both), it is preferable that the second protrusion region P2 be disposed closer to the extension part 41b (busbar connection region) than the first protrusion region P1 at the cross section being perpendicular to the sealing plate 14 (first surface) and extending along the long side direction Y of the sealing plate 14 (first surface) as illustrated in FIG. 8. In particular, it is preferable that the second protrusion region P2 be disposed closer to the extension part 41b than the first protrusion region P1 in the metal joined part 45A on the side close to the extension part 41b (on the left side in FIG. 7).

To the extension part 41b, force of vibration, impact, or the like is applied easily through the busbar 200. When such force is applied to the extension part 41b, the metal joined part 45 starts to be broken from the extension part 41b side. Therefore, by arranging the second protrusion region P2 containing a large amount of second metal with relative high hardness (here, Cu) closer to the extension part 41b than the first protrusion region P1 containing a large amount of first metal with relative low hardness (here, Al), the strength (for example, tensile strength) and the durability of the metal joined part 45 can be improved. Note that the positional relation between the first protrusion region P1 and the second protrusion region P2 can be adjusted by the condition of the welding (specifically, direction of rotation of wobbling) to be described below.

As illustrated in FIG. 8, the metal joined part 45 according to this embodiment additionally includes a third region 453 at the border between the first region 451 and the second region 452. The third region 453 is a region where the first metal is contained by 30 mass% or more and less than 70 mass% and the second metal is contained by 30 mass% or more and less than 70 mass%. However, the third region 453 is not always necessary and can be omitted in another embodiment.

Although not limited in particular, the negative electrode terminal 40 as described above can be manufactured by, for example, preparing the negative electrode first conductive member 41 and the negative electrode second conductive member 42 as described above and performing a manufacturing method including a fastening step and a welding joining step. Note that the order of the fastening step and the welding joining step is not limited in particular; however, from the viewpoint of suppressing the damage of the metal joined part 45 when the fastening part 43 is formed, the welding joining step is performed preferably after the fastening step. However, the fastening step may be performed after the welding joining step or both steps may be performed at substantially the same time. The manufacturing method disclosed herein may further include another step at an optional stage.

In the fastening step, the negative electrode first conductive member 41 and the flange part 42f of the negative electrode second conductive member 42 are mechanically fixed so as to form the fastening part 43. The fastening part 43 can be formed in a manner that, for example, the constriction part 42n of the negative electrode second conductive member 42 is inserted into the concave part 41r of the negative electrode first conductive member 41 and the concave part 41r of the negative electrode first conductive member 41 is deformed along the outer shape of the constriction part 42n of the negative electrode second conductive member 42, so that the inner wall of the concave part 41r is fixed by the negative electrode second conductive member 42. Thus, the strength of the fastening part 43 can be improved. In some preferred embodiments, the fastening part 43 is formed by engaging the concave part 41r of the negative electrode first conductive member 41 and the constriction part 42n of the negative electrode second conductive member 42. For example, the fastening part 43 can be formed by horizontally press-fitting the constriction part 42n of the negative electrode second conductive member 42 into the concave part 41r of the negative electrode first conductive member 41. Thus, the workability of the fastening step can be improved.

In the welding joining step, the thin part 41t of the negative electrode first conductive member 41 and the flange part 42f of the negative electrode second conductive member 42 are joined by welding; thus, the metal joined part 45 is formed. By performing the welding joining step after the fastening step, the metal joined part 45 with the stable shape can be formed with high accuracy. The metal joined part 45 can be formed in a manner that, for example, the thin part 41t of the negative electrode first conductive member 41 and the flange part 42f of the negative electrode second conductive member 42 are stacked, an energy beam is delivered from the negative electrode first conductive member 41 (thin part 41t) side, and welding is performed so that the energy reaches at least the upper surface 42u of the flange part 42f through the thin part 41t. The welding is preferably performed by the method as described above, for example the laser welding.

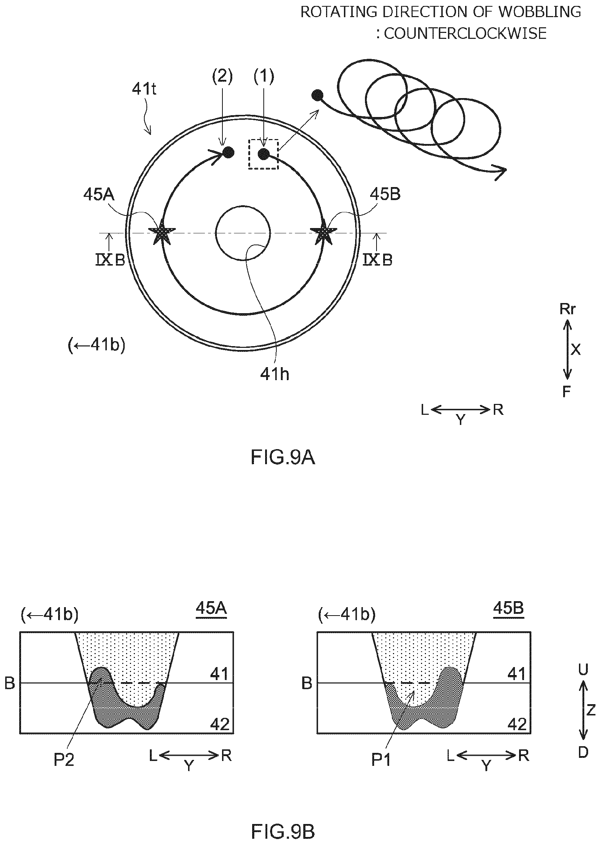

Although not limited in particular, in a preferred embodiment, circumferential welding (wobbling) is performed using a single-mode fiber laser. FIG. 9A is an explanatory view for describing a method of the laser welding in the case of forming the annular metal joined part 45 as illustrated in FIG. 5. FIG. 9A illustrates only a part of the thin part 41t for which the welding is performed in a plan view. Although not limited in particular, the annular metal joined part 45 may be formed as follows: welding starts from a welding start point (1), the whole laser travels clockwise and the rotation of the wobbling progresses counterclockwise, and thus, the laser light is delivered so as to draw an annular trace to a welding end point (2) while surrounding the outer edge of the penetration hole 41h as illustrated in FIG. 9A.

Note that the conditions of the welding (for example, output of laser, welding speed, conditions of wobbling (frequency or width), and the like) are design matters that can be adjusted as appropriate in accordance with, for example, the materials of the negative electrode first conductive member 41 and the negative electrode second conductive member 42, the thickness of the negative electrode first conductive member 41, and the like. In one example, the output of the laser is preferably about 500 to 1500 W, more preferably 1300 W or less, and still more preferably 600 to 1000 W. Additionally, the welding speed is preferably about 10 to 1000 mm/s and more preferably 50 to 100 mm/s. The frequency of the wobbling is preferably about 1000 Hz or less, and for example, 100 to 600 Hz. The width of the wobbling is preferably 0.1 to 10 mm, and more preferably 0.2 to 1 mm, for example. By such conditions, the negative electrode second conductive member 42 (Cu), which is melted less easily relatively, can be melted stably. Moreover, the melting depth can be prevented from becoming too deep and the melting of Cu of the negative electrode second conductive member 42 can be suppressed.

FIG. 9B is a schematic longitudinal cross-sectional view in the vicinity of the metal joined parts 45A and 45B taken along line IXB-IXB in FIG. 9A. When the laser light is delivered along the entire circumference once so as to surround the outer edge of the penetration hole 41h while keeping the direction of the rotation of the wobbling the same as illustrated in FIG. 9A, the second protrusion region P2 is disposed closer to the extension part 41b than the first protrusion region P1 in the metal joined part 45A on the side close to the extension part 41b at the cross section (cross section taken along line IXB-IXB in FIG. 9A) being perpendicular to the sealing plate 14 (first surface), passing the axial center C of the shaft column part 42s, and extending in the radial direction of the shaft column part 42s. On the other hand, in the metal joined part 45B on the side far from the extension part 41b, the first protrusion region P1 is disposed closer to the extension part 41b than the second protrusion region P2.

Note that the metal joined part 45 is formed on the inner peripheral side relative to the fastening part 43 here. Thus, the joined place is displaced less easily and the workability in the welding joining step can be improved. Moreover, the welding place shakes less easily when the metal joined part 45 is formed and thus, the weldability can be improved. Furthermore, here, since the thin part 41t is welded, the energy can be saved and the weldability can be improved.

The power storage device 100 and the power storage module 500 can be used for various applications, and can be suitably used in an application in which an external force such as vibration or impact may be applied during the use thereof and typically, used as a motive power source (driving power source) for a motor mounted on various vehicles such as a passenger car or a truck. Although the type of passenger cars is not particularly limited, examples thereof may include a plug-in hybrid electric vehicle (PHEV), a hybrid electric vehicle (HEV), a battery electric vehicle (BEV), and the like.

Several Examples relating to the present disclosure will be explained below, but the disclosure is not meant to be limited to these Examples.

### <<Test Example I-formation of metal joined part>>

First, a first conductive member with a plate shape (material: aluminum (A1050)) and a second conductive member with a cylindrical shape (material: copper (C1100)) were prepared. Next, for each of Example and Comparative Example, the first conductive member and the second conductive member were overlapped and irradiated with the single-mode fiber laser from the first conductive member side; thus, the welding was performed under conditions shown in Table 1. In this manner, the metal joined part was formed.

**[Table 1]**

| Table 1: Conditions of laser welding | | |
|---|---|---|
| | Comparative Example | Example |
| Mode | Linear welding | Circumferential welding (wobbling) |
| Output | 600 W | 1000 W |
| Welding speed | 60 mm/s | 70 mm/s |
| Conditions of wobbling | - | |
| Frequency | | 400 Hz |
| Width | | 0.7 mm |

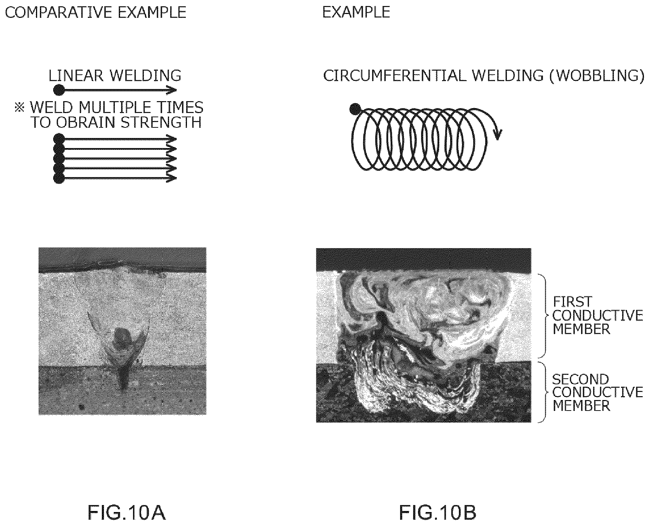

First, for each of Example and Comparative Example, a part where the metal joined part was formed was cut at the cross section along the center of the metal joined part of the second conductive member and embedded and polished; thus, an observation sample was manufactured. Next, the manufactured observation sample was subjected to an etching process using an etchant (etching solution in which ammonia water diluted to 14% and hydrogen peroxide solution diluted to 0.35% were mixed at a ratio of 1:1 and stirred) to change the color of the metal joined part, so that the border was made recognizable. Next, in the electron microscope system SU-1000 manufactured by Hitachi, the observation sample was photographed using a scanning electron microscope (SEM) and a cross-sectional image was obtained. Note that the measurement conditions were as follows. The SEM observation images are shown in FIG. 10A and FIG. 10B. Although not illustrated, the obtained SEM observation images were analyzed using energy dispersive X-ray spectroscopy (EDX), so that the distributions of the metal elements (Al, Cu) were analyzed.

### <<Measurement conditions>>

Acceleration voltage: 15 kV
Spot intensity: 90
Focus distance: 10 mm

FIG. 10A illustrates a trace of the laser welding and is a cross-sectional SEM observation image of the metal joined part in Comparative Example, and FIG. 10B illustrates a trace of the laser welding and is a cross-sectional SEM observation image of the metal joined part in Example. As shown in FIG. 10A, the metal joined part in Comparative Example in which the linear welding was performed was formed so as to be narrower as getting away from the surface on the welded side (in other words, welding depth becomes deeper). On the other hand, the metal joined part in Example in which the circumferential welding (wobbling) was performed as shown in FIG. 10B included the first region containing 70 mass% or more of Al (first metal) and including the first protrusion region and the second region containing 70 mass% or more of Cu (second metal) and including the second protrusion region, with the border part between the first region and the second region bent in an uneven shape as schematically illustrated in FIG. 8. Therefore, it has been confirmed that the metal joined part disclosed herein can be suitably formed by, for example, the circumferential welding (wobbling).

### <<Test Example II-positional relation of protrusion regions>>

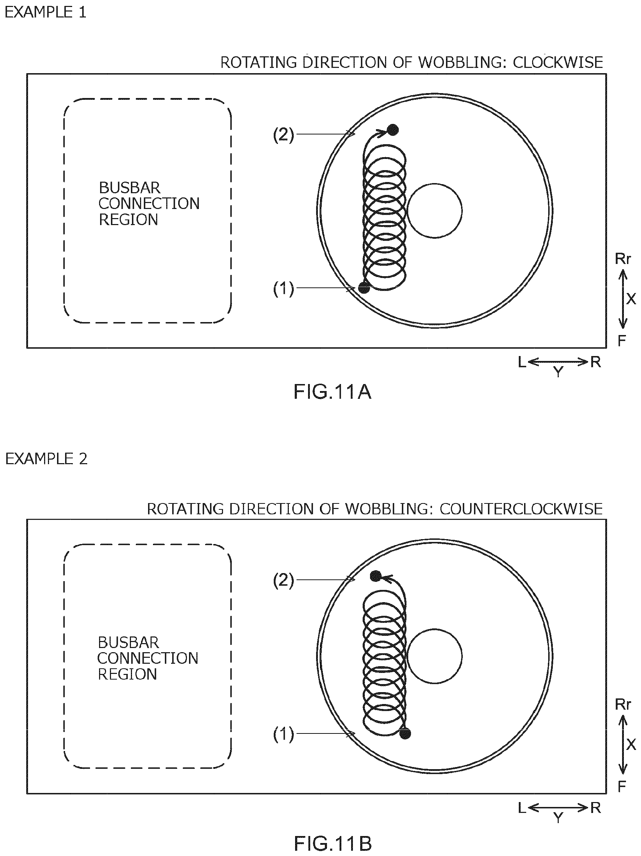

In the present test example, the plurality of negative electrode terminals in which the positional relation between the first protrusion region P1 and the second protrusion region P2 of the metal joined part was changed were manufactured by changing the direction of the rotation of the wobbling (clockwise, counterclockwise) in Example of Test Example I. FIG. 11A is a plan view of the negative electrode terminal schematically illustrating a trace of the laser welding in Example 1, and FIG. 11B is a plan view of the negative electrode terminal schematically illustrating a trace of the laser welding in Example 2.

That is to say, in Example 1, in the laser welding, the welding started from the welding start point (1), the whole laser traveled from the lower side to the upper side (clockwise) in FIG. 11A and the rotation of the wobbling progressed clockwise, and thus, the laser light was delivered so as to draw a trace with a line shape to the welding end point (2) as illustrated in FIG. 11A. On the other hand, in Example 2, in the laser welding, the welding started from the welding start point (1), the whole laser traveled from the lower side to the upper side (clockwise) in FIG. 11B and the rotation of the wobbling progressed counterclockwise (reverse rotation of Example 1), and thus, the laser light was delivered so as to draw a trace with a line shape to the welding end point (2) as illustrated in FIG. 11B. Note that the output of the laser was changed to 800 W in Example 1 and Example 2.

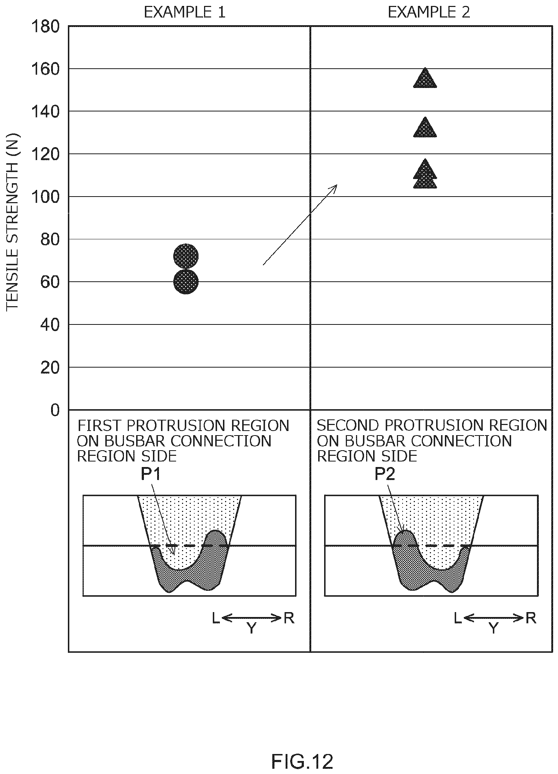

The SEM observation of the metal joined parts formed in this manner indicates that the first protrusion region P1 existed closer to the busbar connection region (on the left side in FIG. 12) than the second protrusion region P2 in Example 1 as illustrated in FIG. 12. On the other hand, in Example 2, the second protrusion region P2 existed closer to the busbar connection region than the first protrusion region P1. In Example 2, the positional relation between the first protrusion region P1 and the second protrusion region P2 is the same as that of the metal joined part 45 in FIG. 8 described in the aforementioned embodiment. Example 1 is an example of the metal joined part obtained by performing mirror inversion in a symmetrical manner on the metal joined part in Example 2.

Next, a busbar was welded to the extension part (busbar connection region) of the negative electrode terminal in each example. Next, a commercial tensile tester was prepared and the second conductive member was held with a clamp of the tensile tester. Then, based on JIS K 6854-1 (determination of peel strength of bonded assemblies-part 1: 90° peel), the busbar was pulled in a vertical direction (90°-direction) so as to peel the busbar from the first conductive member in the tensile tester, and the strength at which the metal joined part was broken was measured as the tensile strength (N). The results are expressed in FIG. 12. Note that as the numeral of the tensile strength is higher, it means that the joining strength is higher.

As expressed in FIG. 12, the tensile strength was relatively higher in Example 2 in which the second protrusion region P2 was disposed close to the busbar connection region than in Example 1 in which the first protrusion region P1 was disposed close to the busbar connection region. Therefore, it has been understood that the metal joined part can have higher strength and durability by disposing the second protrusion region P2 on the busbar connection region side.

Although some embodiments of the present disclosure have been described above, these embodiments are just examples. The present disclosure can be implemented in various other modes. The present disclosure can be implemented based on the contents disclosed in this specification and the technical common sense in the relevant field. The techniques described in the scope of claims include those in which the embodiments exemplified above are variously modified and changed. For example, a part of the aforementioned embodiment can be replaced by another modified aspect, and the other modified aspect can be added to the aforementioned embodiment. Additionally, the technical feature may be deleted as appropriate unless such a feature is described as an essential element.

<First modification> For example, in the aforementioned embodiment, the metal joined part 45 was formed in the annular shape (for example, circular shape) in a plan view as illustrated in FIG. 5. Moreover, the metal joined part 45 was formed by delivering the laser so as to draw the annular trace as illustrated in FIG. 9A. However, the present disclosure is not limited to this example. In a modification, the metal joined part 45 may be formed in a C shape, a semi-circular arc shape, a double or more circular shape, a spiral shape, a linear shape, a dashed line shape, or the like in a plan view. The metal joined part 45 may be formed by performing the laser welding twice or more.

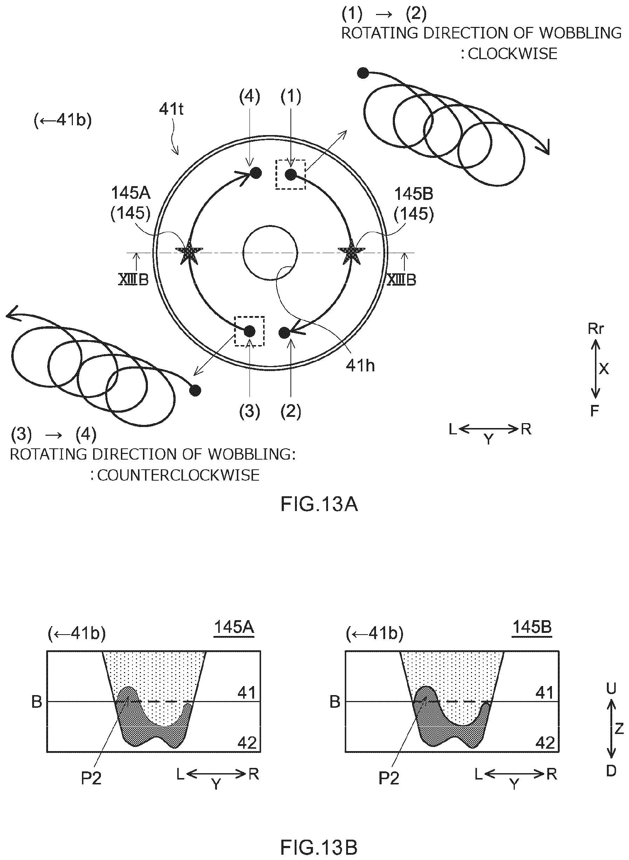

FIG. 13A is a diagram corresponding to FIG. 9A in a first modification. For example, in a case of forming a metal joined part 145 with a substantially annular shape including two semi-circular arc shapes, for example, first, the welding may start from the welding start point (1), the whole laser may travel clockwise and the rotation of the wobbling may progress clockwise, and thus, the laser light may be delivered so as to draw a semi-circular trace to the welding end point (2) along the outer edge of the penetration hole 41h as illustrated in FIG. 13A. Next, the welding may start from a welding start point (3), the whole laser may travel clockwise and the rotation of the wobbling may progress counterclockwise (direction of rotation is changed), and the laser light may be delivered so as to draw a semi-circular trace to a welding end point (4) along the outer edge of the penetration hole 41h.

FIG. 13B is a diagram corresponding to FIG. 9B in the first modification. If the laser light is delivered by changing the direction of the rotation of the wobbling in the middle as illustrated in FIG. 13A, the second protrusion region P2 is disposed closer to the extension part 41b than the first protrusion region P1 in both the two metal joined parts 145 (metal joined part 145A and metal joined part 145B) at the cross section taken along line XIIIB-XIIIB in FIG. 13A. Thus, the metal joined part 145 can have higher strength and durability than in the aforementioned embodiment.

<Second modification> For example, in the aforementioned embodiment, the negative electrode first conductive member 41 is sectioned into the connection part 41a and the extension part 41b in the long side direction Y and the extension part 41b is disposed on one side in the long side direction Y. Moreover, the busbar 200 is attached to the extension part 41b, avoiding the connection part 41a. However, the present disclosure is not limited to this example. In the modification, the negative electrode first conductive member 41 does not need to be sectioned into the connection part 41a and the extension part 41b in the long side direction Y. In this case, for example, the busbar 200 may be attached to a central part of the negative electrode first conductive member 41 in the long side direction Y or may be attached to an outer edge part of the negative electrode first conductive member 41.

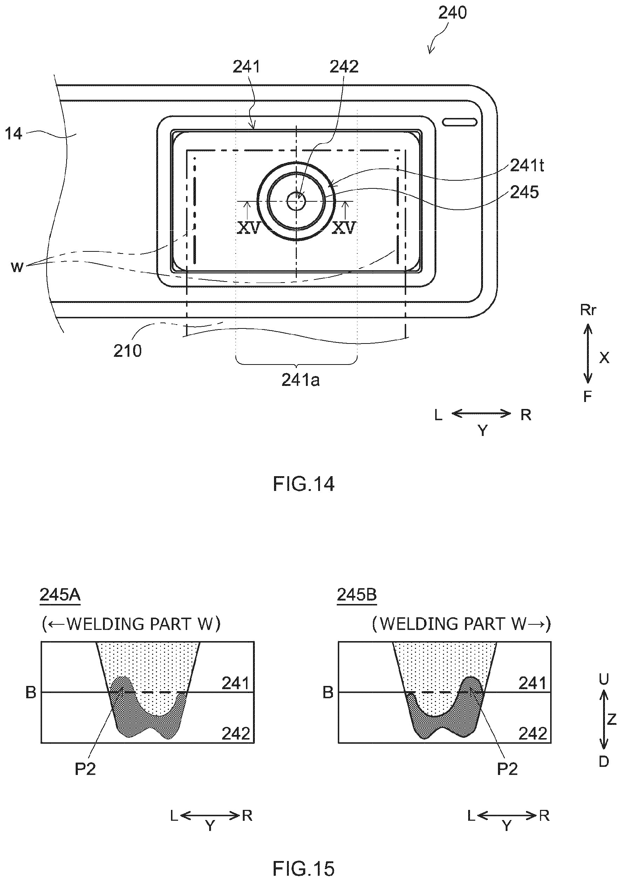

FIG. 14 is a diagram corresponding to FIG. 5 in a second modification. As illustrated in FIG. 14, in a negative electrode terminal 240 in this modification, a connection part 241a is disposed at a central part of a negative electrode first conductive member 241 in the long side direction Y. Moreover, a busbar 210 is attached to the central part in the long side direction Y so as to cover an entire thin part 241t from above. In this case, the welding part W between the busbar 210 and the negative electrode first conductive member 241 is provided at an outer peripheral part of a metal joined part 245. Note that a negative electrode second conductive member 242 may be similar to the negative electrode second conductive member 42 in the aforementioned embodiment.

FIG. 15 is a schematic longitudinal cross-sectional view in a vicinity of metal joined parts 245A and 245B taken along line XV-XV in FIG. 14. At a cross section taken along line XV-XV in FIG. 14, in both the metal joined parts 245A and 245B, the second protrusion region P2 is disposed closer to the welding part W with the busbar 200 than the first protrusion region P1. Thus, the metal joined part 245 can have higher strength and durability similarly to the first modification. The metal joined part 245 as described above can be manufactured similarly to the aforementioned embodiment.

As described above, the following items are given as specific aspects of the art disclosed herein.
Item 1: The power storage device including: the electrode body that includes the first electrode and the second electrode; the battery case that accommodates the electrode body and includes the first surface where the penetration hole is provided; and the first electrode terminal that penetrates the penetration hole of the battery case and is electrically connected to the first electrode, in which the first electrode terminal includes the first conductive member in which the first metal occupies the maximum ratio on the mass basis, the second conductive member in which the second metal that is different from the first metal occupies the maximum ratio on the mass basis, the second conductive member having the shaft part disposed in the penetration hole, and the metal joined part where the first conductive member and the second conductive member are joined, the metal joined part includes, at the cross section being perpendicular to the first surface, passing the axial center of the shaft part, and extending in the radial direction of the shaft part, the first region in which the first metal occupies 70 mass% or more and the second region in which the second metal occupies 70 mass% or more, and when the surface passing the border part where the first conductive member and the second conductive member are in contact with each other around the metal joined part is the border surface, the first region includes the region that exists on the side of the first conductive member relative to the border surface and the first protrusion region that protrudes toward the second conductive member relative to the border surface, and the second region includes the region that exists on the side of the second conductive member relative to the border surface and the second protrusion region that protrudes toward the first conductive member relative to the border surface.
Item 2: The power storage device according to Item 1, in which at the cross section, the ratio of the area of the second protrusion region to the total area of the second region is 0.03 or more and 0.5 or less.
Item 3: The power storage device according to Item 1 or 2, in which the first conductive member is formed of aluminum or an aluminum alloy, and the second conductive member is formed of copper or a copper alloy.
Item 4: The power storage device according to any one of Items 1 to 3, in which the second metal is harder than the first metal, the first electrode terminal further includes the fastening part where the first conductive member and the second conductive member are mechanically fastened, and at the cross section, the second protrusion region is disposed closer to the fastening part than the first protrusion region.
Item 5: The power storage device according to any one of Items 1 to 4, in which the metal joined part further includes the third region in which the first metal is contained by 30 mass% or more and less than 70 mass% and the second metal is contained by 30 mass% or more and less than 70 mass% at the border between the first region and the second region.
Item 6: The power storage module including: the plurality of power storage devices according to any one of Items 1 to 5; and the busbar that electrically connects the plurality of power storage devices to each other.
Item 7: The power storage module according to Item 6, in which the first conductive member is substantially rectangular, and on one side of the first conductive member in the long side direction, the busbar connection region where the busbar is connected is provided, the second metal is harder than the first metal, and the second protrusion region is disposed closer to the busbar connection region than the first protrusion region at the cross section being perpendicular to the first surface and extending along the long side direction of the first surface.

### [Reference Signs List]

10 Battery case
14 Sealing plate (first surface)
20 Electrode body
40 Negative electrode terminal (first electrode terminal)
41, 241 Negative electrode first conductive member (first conductive member)
   41b Extension part (busbar connection region)
42, 242 Negative electrode second conductive member (second conductive member)
   42s Shaft column part (shaft part)
43 Fastening part
45, 45A, 45B, 145, 245 Metal joined part
   451 First region
      P1 First protrusion region
   452 Second region
      P2 Second protrusion region
   453 Third region
100 Power storage device
200, 210 Busbar
500 Power storage module

## Claims

1. A power storage device (100) comprising:
an electrode body (20) that includes a first electrode and a second electrode;
a battery case (10) that accommodates the electrode body (20) and includes a first surface (14) where a penetration hole (19) is provided; and
a first electrode terminal (40) that penetrates the penetration hole (19) of the battery case (10) and is electrically connected to the first electrode, wherein
the first electrode terminal (40) includes a first conductive member (41) in which a first metal occupies a maximum ratio on a mass basis, a second conductive member (42) in which a second metal that is different from the first metal occupies a maximum ratio on a mass basis, the second conductive member (42) having a shaft part (42s) disposed in the penetration hole (19), and a metal joined part (45) where the first conductive member (41) and the second conductive member (42) are joined,
the metal joined part (45) includes, at a cross section being perpendicular to the first surface (14), passing an axial center (C) of the shaft part (42s), and extending in a radial direction of the shaft part (42s), a first region (451) in which the first metal occupies 70 mass% or more and a second region (452) in which the second metal occupies 70 mass% or more, and
when a surface passing a border part where the first conductive member (41) and the second conductive member (42) are in contact with each other around the metal joined part (45) is a border surface (B), the first region (451) includes a region (A1) that exists on a side of the first conductive member (41) relative to the border surface (B) and a first protrusion region (P1) that protrudes toward the second conductive member (42) relative to the border surface (B), and the second region (452) includes a region (A2) that exists on a side of the second conductive member (42) relative to the border surface (B) and a second protrusion region (P2) that protrudes toward the first conductive member (41) relative to the border surface (B).

2. The power storage device (100) according to claim 1, wherein at the cross section, a ratio (C2) of an area of the second protrusion region (P2) to a total area of the second region (452) is 0.03 or more and 0.5 or less.

3. The power storage device (100) according to claim 1 or 2, wherein
the first conductive member (41) is formed of aluminum or an aluminum alloy, and
the second conductive member (42) is formed of copper or a copper alloy.

4. The power storage device (100) according to any one of claims 1 to 3, wherein
the second metal is harder than the first metal,
the first electrode terminal (40) further includes a fastening part (43) where the first conductive member (41) and the second conductive member (42) are mechanically fastened, and
at the cross section, the second protrusion region (P2) is disposed closer to the fastening part (43) than the first protrusion region (P1).

5. The power storage device (100) according to any one of claims 1 to 4, wherein the metal joined part (45) further includes a third region (453) in which the first metal is contained by 30 mass% or more and less than 70 mass% and the second metal is contained by 30 mass% or more and less than 70 mass% at a border between the first region (451) and the second region (452).

6. A power storage module (500) comprising:
a plurality of the power storage devices (100) according to any one of claims 1 to 5; and
a busbar (200) that electrically connects the plurality of power storage devices (100) to each other.

7. The power storage module (500) according to claim 6, wherein
the first conductive member (41) is substantially rectangular, and on one side of the first conductive member (41) in a long side direction, a busbar connection region (41b) where the busbar (200) is connected is provided,
the second metal is harder than the first metal, and
the second protrusion region (P2) is disposed closer to the busbar connection region (41b) than the first protrusion region (P1) at a cross section being perpendicular to the first surface (14) and extending along the long side direction of the first surface (14).

## Patentansprüche

1. Leistungsspeichervorrichtung (100), aufweisend:
einen Elektrodenkörper (20), der eine erste Elektrode und eine zweite Elektrode beinhaltet;
ein Batteriegehäuse (10), das den Elektrodenkörper (20) beherbergt und eine erste Oberfläche (14) beinhaltet, in der sich ein Durchgangsloch (19) befindet; und
einen ersten Elektrodenanschluss (40), der das Durchgangsloch (19) des Batteriegehäuses (10) penetriert und mit der ersten Elektrode elektrisch verbunden ist, wobei
der erste Elektrodenanschluss (40) ein erstes leitendes Element (41), bei dem ein erstes Metall ein Maximalverhältnis auf Massebasis einnimmt, ein zweites leitendes Element (42), bei dem ein zweites Metall, das sich von dem ersten Metall unterscheidet, ein Maximalverhältnis auf Massebasis einnimmt, beinhaltet, wobei das zweite leitende Element (42) einen Schaftteil (42s), der sich in dem Durchgangsloch (19) befindet, und einen zusammengefügten Metallteil (45), an dem das erste leitende Element (41) und das zweite leitende Element (42) zusammengefügt sind, aufweist,
der zusammengefügte Metallteil (45) an einem Querschnitt, der zu der ersten Oberfläche (14) rechtwinklig ist, an einer axialen Mitte (C) des Schaftteils (42s) vorbei verlaufend, und in einer radialen Richtung des Schaftteils (42s) verlaufend, einen ersten Bereich (451), an dem das erste Metall 70 Masseprozent oder mehr einnimmt, und einen zweiten Bereich (452), an dem das zweite Metall 70 Masseprozent oder mehr einnimmt, beinhaltet, und
wenn eine Oberfläche, die an einem Grenzteil vorbei verläuft, an dem das erste leitende Element (41) und das zweite leitende Element (42) miteinander um den zusammengefügten Metallteil (45) herum in Kontakt stehen, eine Grenzfläche (B) ist, der erste Bereich (451) einen Bereich (A1), der auf einer Seite des ersten leitenden Elements (41) relativ zu der Grenzfläche (B) existiert, und einen ersten Vorsprungbereich (P1), der in Richtung des zweiten leitenden Elements (42) relativ zu der Grenzfläche (B) hervorsteht, beinhaltet, und der zweite Bereich (452) einen Bereich (A2), der auf einer Seite des zweiten leitenden Elements (42) relativ zu der Grenzfläche (B) existiert, und einen zweiten Vorsprungbereich (P2), der in Richtung des ersten leitenden Elements (41) relativ zu der Grenzfläche (B) hervorsteht, beinhaltet.

2. Leistungsspeichervorrichtung (100) nach Anspruch 1, wobei an dem Querschnitt ein Verhältnis (C2) einer Fläche des zweiten Vorsprungbereichs (P2) zu einer Gesamtfläche des zweiten Bereichs (452) 0,03 oder mehr und 0,5 oder weniger beträgt.

3. Leistungsspeichervorrichtung (100) nach Anspruch 1 oder 2, wobei
das erste leitende Element (41) aus Aluminium oder einer Aluminiumlegierung besteht, und
das zweite leitende Element (42) aus Kupfer oder einer Kupferlegierung besteht.

4. Leistungsspeichervorrichtung (100) nach einem der Ansprüche 1 bis 3, wobei
das zweite Metall härter ist als das erste Metall,
der erste Elektrodenanschluss (40) ferner einen Befestigungsteil (43) beinhaltet, an dem das erste leitende Element (41) und das zweite leitende Element (42) mechanisch befestigt sind, und
sich an dem Querschnitt der zweite Vorsprungbereich (P2) näher an dem Befestigungsteil (43) befindet als der erste Vorsprungbereich (P1).

5. Leistungsspeichervorrichtung (100) nach einem der Ansprüche 1 bis 4, wobei der zusammengefügte Metallteil (45) ferner einen dritten Bereich (453) beinhaltet, an dem an einem Grenzbereich zwischen dem ersten Bereich (451) und dem zweiten Bereich (452) das erste Metall mit 30 Masseprozent oder mehr und weniger als 70 Masseprozent enthalten ist und das zweite Metall mit 30 Masseprozent oder mehr und weniger als 70 Masseprozent enthalten ist.

6. Leistungsspeichermodul (500), aufweisend:
eine Mehrzahl der Leistungsspeichervorrichtungen (100) nach einem der Ansprüche 1 bis 5; und
eine Stromschiene (200), die die Mehrzahl an Leistungsspeichervorrichtungen (100) elektrisch miteinander verbindet.

7. Leistungsspeichermodul (500) nach Anspruch 6, wobei
das erste leitende Element (41) im Wesentlichen rechteckig ist und auf einer Seite des ersten leitenden Elements (41) in einer längsseitigen Richtung ein Stromschienenverbindungsbereich (41b) vorhanden ist, an dem die Stromschiene (200) verbunden ist,
das zweite Metall härter ist als das erste Metall, und
der zweite Vorsprungbereich (P2) sich an einem Querschnitt, der zu der ersten Oberfläche (14) rechtwinklig ist und entlang der längsseitigen Richtung der ersten Oberfläche (14) verläuft, näher an dem Stromschienenverbindungsbereich (41b) befindet als der erste Vorsprungbereich (P1).

## Revendications

1. Dispositif de stockage d'énergie (100) comprenant :
un corps d'électrode (20) qui comprend une première électrode et une deuxième électrode ;
un boîtier de batterie (10) qui accueille le corps d'électrode (20) et comprend une première surface (14) où un trou de pénétration (19) est prévu ; et
une première borne d'électrode (40) qui pénètre dans le trou de pénétration (19) du boîtier de la batterie (10) et est connectée électriquement à la première électrode, dans lequel
la première borne d'électrode (40) comprend un premier élément conducteur (41) dans lequel un premier métal occupe un rapport maximal en termes de masse, un deuxième élément conducteur (42) dans lequel un deuxième métal différent du premier métal occupe un rapport maximal en termes de masse, le deuxième élément conducteur (42) ayant une partie d'arbre (42s) disposée dans le trou de pénétration (19), et une partie métallique jointe (45) où le premier élément conducteur (41) et le deuxième élément conducteur (42) sont joints,
la partie métallique jointe (45) comprend, à une section transversale perpendiculaire à la première surface (14), passant par un centre axial (C) de la partie de l'arbre (42s), et s'étendant dans une direction radiale de la partie de l'arbre (42s), une première région (451) dans laquelle le premier métal occupe 70 % de masse ou plus et une deuxième région (452) dans laquelle le deuxième métal occupe 70 % de masse ou plus, et
lorsqu'une surface traversant une partie de bordure où le premier élément conducteur (41) et le deuxième élément conducteur (42) sont en contact l'un avec l'autre autour de la partie métallique jointe (45) est une surface de bordure (B), la première région (451) comprend une région (A1) qui existe sur un côté du premier élément conducteur (41) par rapport à la surface de bordure (B) et une première région de protubérance (P1) qui fait saillie vers le deuxième élément conducteur (42) par rapport à la surface de bordure (B), et la deuxième région (452) comprend une région (A2) qui existe sur un côté du deuxième élément conducteur (42) par rapport à la surface de bordure (B) et une deuxième région de protubérance (P2) qui fait saillie vers le premier élément conducteur (41) par rapport à la surface de bordure (B).

2. Le dispositif de stockage d'énergie (100) selon la revendication 1, dans lequel, au niveau de la section transversale, un rapport (C2) d'une surface de la deuxième région de protubérance (P2) à une surface totale de la deuxième région (452) est supérieur ou égal à 0,03 et inférieur ou égal à 0,5.

3. Le dispositif de stockage d'énergie (100) selon la revendication 1 ou 2, dans lequel
le premier élément conducteur (41) est formé d'aluminium ou d'un alliage d'aluminium, et
le deuxième élément conducteur (42) est formé de cuivre ou d'un alliage de cuivre.

4. Le dispositif de stockage d'énergie (100) selon l'une des revendications 1 à 3, dans lequel
le deuxième métal est plus dur que le premier métal,
la première borne d'électrode (40) comprend en outre une partie de fixation (43) où le premier élément conducteur (41) et le deuxième élément conducteur (42) sont fixés mécaniquement, et
au niveau de la section transversale, la deuxième région de protubérance (P2) est disposée plus près de la partie de fixation (43) que la première région de protubérance (P1).

5. Le dispositif de stockage d'énergie (100) selon l'une des revendications 1 à 4, dans lequel la pièce métallique jointe (45) comprend en outre une troisième région (453) dans laquelle le premier métal est contenu à hauteur de 30 % en masse ou plus et de moins de 70 % en masse et le deuxième métal est contenu à hauteur de 30 % en masse ou plus et de moins de 70 % en masse à une frontière entre la première région (451) et la deuxième région (452).

6. Module de stockage d'énergie (500) comprenant :
une pluralité de dispositifs de stockage d'énergie (100) selon l'une des revendications 1 à 5 ; et
un jeu de barres (200) qui relie électriquement la pluralité de dispositifs de stockage d'énergie (100) les uns aux autres.

7. Le module de stockage d'énergie (500) selon la revendication 6, dans lequel
le premier élément conducteur (41) est sensiblement rectangulaire, et sur un côté du premier élément conducteur (41) dans une direction latérale longue, une région de connexion de jeu de barres (41b) où le jeu de barres (200) est connecté est prévu,
le deuxième métal est plus dur que le premier métal, et
la deuxième région de protubérance (P2) est disposée plus près de la région de connexion de jeu de barres (41b) que la première région de protubérance (P1) dans une section transversale perpendiculaire à la première surface (14) et s'étendant le long de la direction latérale longue de la première surface (14).
